# EUROPÄISCHE PATENTSCHRIFT

(11) **EP 2 179 191 B1**
(45) Veröffentlichungstag und Bekanntmachung des Hinweises auf die Patenterteilung: **27.06.2012**
(21) Anmeldenummer: 08785521.9
(22) Anmeldetag: 13.08.2008
(51) Int. Cl.: F16D 3/66, F16D 3/04, B22F 5/10

(54) **KUPPLUNGSGLIED FÜR EINE MITNEHMERKUPPLUNG UND HERSTELLUNGSVERFAHREN**
CONNECTING LINK FOR AN INTERLOCKING DEVICE AND PRODUCTION METHOD
ÉLÉMENT D'ACCOUPLEMENT POUR UN ACCOUPLEMENT ENTRAÎNEUR, ET PROCÉDÉ DE FABRICATION

(30) Priorität: 13.08.2007 DE 102007038254
(43) Veröffentlichungstag der Anmeldung: 28.04.2010
(73) Patentinhaber: GKN Sinter Metals Holding GmbH, 42477 Radevormwald (DE)
(72) Erfinder: HUNDRIESER, Stefan, 53179 Bonn (DE)
(74) Vertreter: Geskes, Christoph
(86) Internationale Anmeldenummer: PCT/EP2008/006645
(87) Internationale Veröffentlichungsnummer: WO 2009/021722

(56) Entgegenhaltungen:
- FR-A- 554 876
- FR-E- 67 210
- JP-A- 6 042 473
- US-A- 1 460 869

## Beschreibung

Die vorliegende Erfindung betrifft ein Kupplungsglied für eine Mitnehmerkupplung sowie ein Verfahren zum Herstellen eines Sinterbauteils mit Verbindungseinrichtung, insbesondere eines Kupplungsglieds für eine Mitnehmerkupplung.

Im Stand der Technik sind derartige Kupplungsglieder für eine Mitnehmerkupplung, die auch Klauenkupplung genannt wird, bekannt, die einen Aufnahmeraum zur Aufnahme eines anderen Kupplungsglieds der Mitnehmerkupplung aufweist, wobei der Aufnahmeraum eine Anlagefläche und eine Gegenfläche umfasst, die zu der Anlagefläche hin weist. Bei diesen bekannten Kupplungsgliedern wird die Verbindung mit dem jeweils anderen Kupplungsglied dadurch hergestellt, dass das andere Kupplungsglied ganz oder teilweise, beispielsweise mit einem Vorsprung, in den Aufnahmeraum gesetzt wird. Dabei werden je nach Bedarf die Fertigungstoleranzen des anderen Kupplungsglieds beziehungsweise Vorsprungs und des Aufnahmeraums passend zu der jeweils gewünschten Passungsart, also Spielpassung, Übergangspassung oder Übermaßpassung ausgewählt. Kleine Toleranzen können meist durch spanende Nacharbeit erzielt werden, die vor allem bei harten und/oder spröden Werkstoffen, wie zum Beispiel Keramiken, Gläsern, Sintermetallen, usw., mit beträchtlichem Mehraufwand verbunden ist.

Es ist Aufgabe der vorliegenden Erfindung, ein Kupplungsglied für eine Mitnehmerkupplung zu schaffen, das kostengünstig hergestellt werden kann, sowie ein Verfahren zum Herstellen eines Sinterbauteils mit Verbindungseinrichtung, insbesondere eines Kupplungsglieds für eine Mitnehmerkupplung, das einfach auszuführen ist.

Diese Aufgabe wird durch ein Kupplungsglied für eine Mitnehmerkupplung gemäß Anspruch 1 oder 2 und ein Verfahren zum Herstellen eines Sinterbauteils mit Verbindungseinrichtung, insbesondere eines Kupplungsglieds für eine Mitnehmerkupplung gemäß Anspruch 16 oder 17 gelöst. Weitere Ausführungsformen sind in den Unteransprüchen beschrieben.

Die Erfindung schlägt ein Kupplungsglied für eine Mitnehmerkupplung vor, das einen Aufnahmeraum zur Aufnahme eines anderen Kupplungsglieds der Mitnehmerkupplung aufweist. Der Aufnahmeraum umfasst eine Anlagefläche und eine Gegenfläche, die zu der Anlagefläche hin weist. Ein Loch ist hinter der Gegenfläche ausgebildet und über einen Spalt mit dem Aufnahmeraum verbunden. Das Loch erstreckt sich parallel zur Längsachse der Mitnehmerkupplung. Ein Federelement ist in dem Loch angeordnet und weist einen Anlagebereich zur Anlage an dem anderen Kupplungsglied auf, der durch den Spalt in den Aufnahmeraum ragt. Der Aufnahmeraum des vorgeschlagenen Kupplungsglieds, das hier auch erstes Kupplungsglied genannt wird, nimmt das andere Kupplungsglied, das mit dem ersten Kupplungsglied verbunden werden soll und hier auch zweites Kupplungsglied genannt wird, auf, wobei dies so zu verstehen ist, dass sich das zweite Kupplungsglied zumindest teilweise, beispielsweise mit einem Vorsprung, in dem Aufnahmeraum befindet.

Die Erfindung schlägt zudem ein Kupplungsglied für eine Mitnehmerkupplung vor, das einen Vorsprung zum Einsetzen in einen Aufnahmeraum eines anderen Kupplungsglieds der Mitnehmerkupplung aufweist. Der Vorsprung umfasst eine Anlagefläche und eine Gegenfläche, die von der Anlagefläche weg weist. Ein Loch ist hinter der Gegenfläche ausgebildet und über einen Spalt mit dem vor der Gegenfläche befindlichen Außenraum verbunden, also mit dem Aufnahmeraum, falls der Vorsprung in den Aufnahmeraum eingesetzt ist. Das Loch erstreckt sich parallel zur Längsachse der Mitnehmerkupplung. Ein Federelement ist in dem Loch angeordnet und weist einen Anlagebereich zur Anlage an dem anderen Kupplungsglied auf, der durch den Spalt in den vor der Gegenfläche befindlichen Außenraum ragt, also in den Aufnahmeraum, falls der Vorsprung in den Aufnahmeraum eingesetzt ist. Der Aufnahmeraum des anderen Kupplungsglieds, das auch hier zweites Kupplungsglied genannt wird, nimmt das vorgeschlagene Kupplungsglied, das mit dem zweiten Kupplungsglied verbunden werden soll und auch hier erstes Kupplungsglied genannt wird, auf, wobei dies so zu verstehen ist, dass sich das erste Kupplungsglied zumindest teilweise, beispielsweise mit dem Vorsprung, in dem Aufnahmeraum befindet.

Das Federelement ragt bei den vorgeschlagenen Kupplungsgliedern mit seinem Anlagebereich so weit in den Aufnahmeraum hinaus, dass es unter Vorspannung an dem zweiten Kupplungsglied anliegt und dieses gegen die Anlagefläche drückt. Das zweite Kupplungsglied ist also, zumindest im Rahmen der Federkraft des Federelementes, spielfrei mit dem ersten Kupplungsglied verbunden. Selbst größere Toleranzen der ersten und zweiten Kupplungsglieder können ausgeglichen und trotzdem eine spielfreie Passung erzielt werden. Die Herstellung von Kupplungsgliedern mit größeren Toleranzen ist einfacher und kostengünstiger, selbst wenn man den zusätzlichen Aufwand für Löcher und Federelemente berücksichtigt, die bei dem vorgeschlagenen ersten Kupplungsglied vorgesehen sind. Denn die Löcher können sehr kostengünstig und positionsgenau erzeugt werden, beispielsweise bereits beim Urformen des ersten Kupplungsglieds durch Gießen, Pressen usw. - wobei sie auf Grund ihrer Ausrichtung parallel zur Längsachse der Mitnehmerkupplung ein leichtes Entformen aus einem Gieß- oder Presswerkzeug sicherstellen -, oder indem sie durch Bohren, Fräsen usw. in das erste Kupplungsglied eingebracht werden, und auch die Federelemente können sehr kostengünstig hergestellt und, beispielsweise automatisiert, in die Löcher eingesetzt werden.

Die vorgeschlagenen Kupplungsglieder sind besonders für dynamisch belastete Systeme geeignet. So entstehen beispielsweise in schwingenden Systemen mit dynamischen Kräften, insbesondere bei schwingenden oder schwellenden Kräften, in den miteinander verbundenen Kupplungsgliedern hohe Spannungsspitzen, die insbesondere an kerbempfindlichen Stellen zu Bruch führen können. Diese dynamischen Kräfte werden immer kritischer, je größer das Spiel der verbundenen Kupplungsglieder ist. Besonders gefährdet sind daher Kupplungsglieder mit geringer Bruchdehnung beziehungsweise großer Sprödigkeit, wie zum Beispiel Kupplungsglieder aus Sinterhartmetall, Keramik, Glas und dergleichen. Über die Federelemente kann die Federkraft so gewählt werden, dass auch bei maximaler Belastung kein Spiel auftritt. Hierdurch kann erreicht werden, dass der Sicherheitsfaktor gegen Bruch erhöht wird und/oder Materialstärke eingespart wird und/oder preiswertere, weil beispielsweise sprödere, Werkstoffe eingesetzt werden. Ein weiterer Vorteil liegt in den häufigen Fällen, dass sich die dynamischen Kräfte im Vorfeld nicht genau ermitteln lassen, darin, dass in diesen Fällen die Geometrie der Kupplungsglieder nicht geändert werden muss. Vielmehr können Durchmesser und Position der Löcher beibehalten bleiben und können verschiedene Federelemente, die bei gleichen Außenabmessungen unterschiedliche Federkonstanten aufweisen, einfach ausprobiert werden, da sie leicht ausgetauscht werden können.

Es kann vorgesehen sein, dass jedes der vorgeschlagenen Kupplungsglieder einen Sinterwerkstoff umfasst. Da fertig gesinterte Kupplungsglieder meist sehr hart sind und daher nur mit großem Aufwand und Werkzeugverschleiß spanend nachbearbeitet werden können, kann es bei jedem der vorgeschlagenen Kupplungsglieder als ein weiterer Vorteil angesehen werden, dass auf Grund der ermöglichten größeren Toleranzen derartige spanende Nacharbeiten nur noch in stark verringertem Maße oder sogar gar nicht mehr erforderlich sind. In vielen Fällen kann die Form des Kupplungsglieds, insbesondere die Vertiefungen wie der Aufnahmeraum und die Löcher, ohne Hinterschneidungen gestaltet werden, so dass das Urformen, beispielsweise durch Gießen, Pressen usw., mit wenig Aufwand und einfachen Werkzeugen erfolgen kann, was insbesondere bei Sinterbauteilen vorteilhaft ist.

Jedes der vorgeschlagenen Kupplungsglieder kann nach Bedarf mit wenigstens einem weiteren Loch und wenigstens einem weiteren Federelement in jedem weiteren Loch versehen sein, wobei jedes der weiteren Löcher über einen Spalt mit dem Aufnahmeraum verbunden ist, und wobei jedes der weiteren Federelemente einen Anlagenbereich zur Anlage an dem anderen Kupplungsglied aufweist, der durch den jeweiligen Spalt in den Aufnahmeraum ragt. So kann beispielsweise in einer ersten Alternative ein weiteres Loch hinter der Gegenfläche ausgebildet sein. Die beiden Löcher liegen dann also nebeneinander auf derselben Seite des Aufnahmeraums. Und das andere Kupplungsglied wird von den in den beiden Löchern sitzenden Federelementen an zwei nebeneinander liegenden Bereichen gegen die Anlagefläche gedrückt.

In einer zweiten Alternative kann beispielsweise ein weiteres Loch hinter der Anlagefläche ausgebildet sein. Die beiden Löcher liegen dann also einander direkt gegenüber oder versetzt zueinander auf den beiden zueinander weisenden Seiten des Aufnahmeraums. Und das andere Kupplungsglied wird von den Federelementen, die in dem Loch hinter der Gegenfläche sitzen und hier auch erste Federelemente genannt werden, gegen die weiteren Federelemente, die in dem weiteren Loch hinter der Anlagefläche sitzen und hier auch zweite Federelemente genannt werden, gedrückt beziehungsweise zwischen den ersten und zweiten Federelementen eingeklemmt, falls die beiden Löcher und somit die ersten und zweiten Federelemente einander direkt gegenüberliegen, oder es wird in dem anderen Fall, dass die beiden Löcher und somit die ersten und zweiten Federelemente versetzt zueinander liegen, von den ersten Federelementen gegen die Anlagefläche und von den zweiten Federelementen gegen die Gegenfläche gedrückt.

Die erste und zweite Alternative können aber auch kombiniert werden, so dass drei Löcher und entsprechende erste, zweite und dritte Verbindungselemente vorhanden sind, von denen zwei Löcher hinter der Gegenfläche und eines hinter der Anlagefläche liegt, oder umgekehrt. Darüber hinaus können auch noch ein viertes Loch und wenigstens ein weiteres, viertes Federelement in diesem vierten Loch vorgesehen sein. Auch in diesem Fall können die Lage der Löcher relativ zum Aufnahmeraum beziehungsweise hinter der Gegenfläche und der Anlagefläche sowie die Anordnung der Löcher relativ zueinander nach Bedarf beliebig gewählt werden. So können beispielsweise zwei Löcher hinter der Gegenfläche und die beiden anderen Löcher hinter der Anlagefläche ausgebildet sein und jeweils zwei Löcher direkt einander gegenüberliegen.

Bevorzugt kann vorgesehen sein, dass das Federelement einen Hohlzylinder umfasst, der einen zwischen den beiden Stirnflächen verlaufenden Schlitz aufweist. Der Schlitz verläuft bevorzugt parallel zur Längsachse des Hohlzylinders, kann aber auch schräg verlaufen. Der Hohlzylinder ist bevorzugt aus Bandmaterial aus Federstahl hergestellt, kann aber auch aus jedem anderen für den jeweiligen Anwendungsfall geeigneten Material wie beispielsweise Kunststoff bestehen.

Das Federelement kann aber nach Bedarf auch anders geformt sein und beispielsweise einen Ring umfassen, der einen Schlitz aufweist. Der Ring ist bevorzugt aus Drahtmaterial aus Federstahl hergestellt, kann aber auch aus jedem anderen für den jeweiligen Anwendungsfall geeigneten Material wie beispielsweise Kunststoff bestehen.

Des Weiteren kann vorgesehen sein, dass eine Erhebung von der Umfangfläche des Lochs vorspringt und in dem Schlitz des hohlzylindrischen oder ringförmigen Federelementes liegt. Die Erhebung ist bevorzugt eine parallel zur Längsachse des Lochs verlaufende Rippe, da sich diese leichter aus einem Gieß- oder Presswerkzeug entformen lässt. Die Erhebung verhindert ein Verdrehen des Federelementes im Loch.

Des Weiteren kann vorgesehen sein, dass das Federelement massiv, beispielsweise in Form eines Stiftes oder Bolzens, ausgebildet ist und einen elastischen Werkstoff wie beispielsweise Kunststoff oder Gummi umfasst.

Die Form des Federelementes kann nach Bedarf beliebig gewählt werden. So kann beispielsweise vorgesehen sein, dass es eine Umfangsfläche mit ovalem, bevorzugt elliptischem, bevorzugt kreisrundem Querschnitt aufweist. Auch die Form des Loches kann nach Bedarf beliebig gewählt werden und entspricht bevorzugt der Form des Federelementes. So kann beispielsweise vorgesehen sein, dass das Loch einen ovalen, bevorzugt elliptischen, bevorzugt kreisrunden Querschnitt aufweist.

Das Federelement kann nach Bedarf mit einem beliebigen Teil an dem anderen Kupplungsglied anliegen, als Anlagebereich wird aber ein Teil der äußeren Umfangsfläche des Federelementes bevorzugt.

Nach Bedarf kann wenigstens ein weiteres Federelement in jedem Loch angeordnet sein.

Außerdem kann vorgesehen sein, dass das Loch wenigstens eine Öffnung aufweist, deren Rand zumindest teilweise radial einwärts vorspringt. Dieser Rand dient als Sicherung gegen ein Herausrutschen des Federelementes aus seinem Loch. Er ist bevorzugt als Bördelkante ausgebildet.

Es kann vorgesehen sein, dass das Federelement an wenigstens einer Stelle, bevorzugt im Bereich des Loches, an dem Kupplungsglied, bevorzugt durch Punktschweißen, befestigt ist. Dies sorgt für eine dauerhafte Sicherung des Federelementes an dem Kupplungsglied beziehungsweise im Loch.

Die Erfindung schlägt außerdem ein Verfahren zum Herstellen eines Sinterbauteils mit Verbindungseinrichtung, insbesondere eines Kupplungsglieds für eine Mitnehmerkupplung vor, mit den Schritten, dass:
- ein Grünling geformt wird, der einen Aufnahmeraum zur Aufnahme eines anderen Bauteils, insbesondere eines anderen Kupplungsglieds der Mitnehmerkupplung aufweist, wobei der Aufnahmeraum eine Anlagefläche und eine Gegenfläche umfasst, die zu der Anlagefläche hin weist, und wobei wenigstens ein Loch hinter der Gegenfläche ausgebildet und über einen Spalt mit dem Aufnahmeraum verbunden ist;
- der Grünling gesintert wird; und
- wenigstens ein Federelement in jedes Loch derart eingesetzt wird, dass es einen Anlagebereich zur Anlage an dem anderen Bauteil beziehungsweise Kupplungsglied aufweist, der durch den Spalt in den Aufnahmeraum ragt.

Die Erfindung schlägt des Weiteren ein Verfahren zum Herstellen eines Sinterbauteils mit Verbindungseinrichtung, insbesondere eines Kupplungsglieds für eine Mitnehmerkupplung vor, mit den Schritten, dass:
- ein Grünling geformt wird, der einen Vorsprung zum Einsetzen in einen Aufnahmeraum eines anderen Bauteils, insbesondere eines anderen Kupplungsglieds (11) der Mitnehmerkupplung aufweist, wobei der Vorsprung eine Anlagefläche und eine Gegenfläche umfasst, die von der Anlagefläche weg weist, und wobei wenigstens ein Loch hinter der Gegenfläche ausgebildet und über einen Spalt mit dem vor der Gegenfläche befindlichen Außenraum verbunden ist, also mit dem Aufnahmeraum, falls der Vorsprung in den Aufnahmeraum eingesetzt ist;
- der Grünling gesintert wird; und
- wenigstens ein Federelement in jedes Loch derart eingesetzt wird, dass es einen Anlagebereich zur Anlage an dem anderen Bauteil beziehungsweise Kupplungsglied aufweist, der durch den Spalt in den vor der Gegenfläche befindlichen Außenraum ragt, also in den Aufnahmeraum, falls der Vorsprung in den Aufnahmeraum eingesetzt ist.

Der Grünling weist bei beiden vorgeschlagenen Verfahren also die Merkmale des entsprechenden vorgeschlagenen Kupplungsglieds für eine Mitnehmerkupplung auf, mit Ausnahme der Federelemente und des Merkmals, dass das Loch sich parallel zur Längsachse der Mitnehmerkupplung erstreckt. Diese Federelemente werden erst nach dem Sintern des Grünlings in die entsprechenden Löcher eingesetzt. Der Grünling kann nach Bedarf auf jede beliebige Art und Weise geformt werden. Bevorzugt wird beispielsweise das Pressen von Pulver. In diesem Fall ist es besonders günstig, die Löcher als Sackbohrungen auszuführen, die parallel zur Entformungsrichtung des Presswerkzeugs ausgerichtet sind. Die Federelemente können dann leicht mit Hilfe automatisierter Montage in die Sackbohrungen hinein geschoben werden.

Es kann vorgesehen sein, dass:
- wenigstens ein weiteres Loch hinter der Anlagefläche ausgebildet und über einen Spalt mit dem vor der Anlagefläche befindlichen Außenraum verbunden ist, also mit dem Aufnahmeraum, falls der Vorsprung in den Aufnahmeraum eingesetzt ist;
- wenigstens ein weiteres Federelement in jedes weitere Loch derart eingesetzt wird, dass es einen Anlagebereich zur Anlage an dem anderen Bauteil beziehungsweise Kupplungsglied aufweist, der durch den Spalt in den vor der Anlagefläche befindlichen Außenraum ragt, also in den Aufnahmeraum, falls der Vorsprung in den Aufnahmeraum eingesetzt ist.

Es kann vorgesehen sein, dass:
- beim Formen des Grünlings an zumindest einem Teil des Umfangsrandes jedes Lochs Materialüberschuss vorgesehen ist, der axial vorspringt;
- nach dem Einsetzen des Federelementes der Materialüberschuss derart umgeformt wird, dass er zumindest teilweise radial einwärts vorspringt.

Der radial einwärts umgeformte Teil des Materialüberschusses führt zu einer Verengung des Lochausgangs und sorgt für eine dauerhafte Sicherung der Federelemente in ihren Löchern.

Für das Umformen des Materialüberschusses können nach Bedarf beliebige Methoden gewählt werden, wobei Bördeln oder Taumelnieten bevorzugt sind.

Es kann vorgesehen sein, dass das Federelement an wenigstens einer Stelle, bevorzugt im Bereich des Loches, an dem Bauteil beziehungsweise Kupplungsglied, bevorzugt durch Punktschweißen, befestigt wird. Dies sorgt für eine dauerhafte Sicherung des Federelementes an dem Bauteil beziehungsweise Kupplungsglied beziehungsweise im Loch.

Es kann zudem vorgesehen sein, dass jedes Loch sich parallel zur Längsachse der Mitnehmerkupplung erstreckt. Durch diese Ausrichtung der Löcher parallel zur Längsachse der Mitnehmerkupplung wird ein leichtes Entformen aus einem Presswerkzeug sichergestellt, das bevorzugt beim Formen des Grünlings verwendet wird.

Weitere vorteilhafte Ausführungsformen der Erfindung werden anhand der nachfolgenden Zeichnungen näher erläutert werden. Die daraus hervorgehenden einzelnen Merkmale sind jedoch nicht auf die einzelnen Ausführungsformen beschränkt, sie können vielmehr mit weiter oben beschriebenen einzelnen Merkmalen oder Merkmalen anderer Ausführungsformen zu weiteren Ausführungsformen verbunden werden. Es zeigen:
- Fig. 1: eine perspektivische Darstellung eines Kupplungsglied für eine Mitnehmerkupplung in einer ersten Ausführungsform, das mit einem zweiten Kupplungsglied der Mitnehmerkupplung verbunden ist;
- Fig. 2: eine Aufsicht zu der Fig. 1;
- Fig. 3: eine Aufsicht eines Kupplungsglieds für eine Mitnehmerkupplung in einer zweiten Ausführungsform;
- Fig. 4: in vergrößertem Maßstab die Einzelheit IV aus der Fig. 3;
- Fig. 5: eine Aufsicht eines Kupplungsglieds für eine Mitnehmerkupplung in einer dritten Ausführungsform;
- Fig. 6: eine teilweise geschnittene Seitenansicht eines Kupplungsglieds für eine Mitnehmerkupplung in einer vierten Ausführungsform;
- Fig. 7a+b: in vergrößertem Maßstab die Einzelheit VIIa aus der Fig. 6 in einem Endzustand (Fig. 7a) und in einer Vorstufe (Fig. 7b);
- Fig. 8: eine Aufsicht eines Kupplungsglieds für eine Mitnehmerkupplung in einer fünften Ausführungsform, das mit einem zweiten Kupplungsglied der Mitnehmer- kupplung verbunden ist; und
- Fig. 9: einen Längsschnitt zu der Fig. 8;
- Fig. 10: ein Ablaufdiagramm eines Verfahrens zum Herstellen eines Sinterbauteils mit Verbindungseinrichtung, insbesondere eines Kupplungsglieds für eine Mitnehmerkupplung in einer ersten Ausführungsform; und
- Fig. 11: ein Ablaufdiagramm eines Verfahrens zum Herstellen eines Sinterbauteils mit Verbindungseinrichtung, insbesondere eines Kupplungsglieds für eine Mitnehmerkupplung in einer zweiten Ausführungsform.

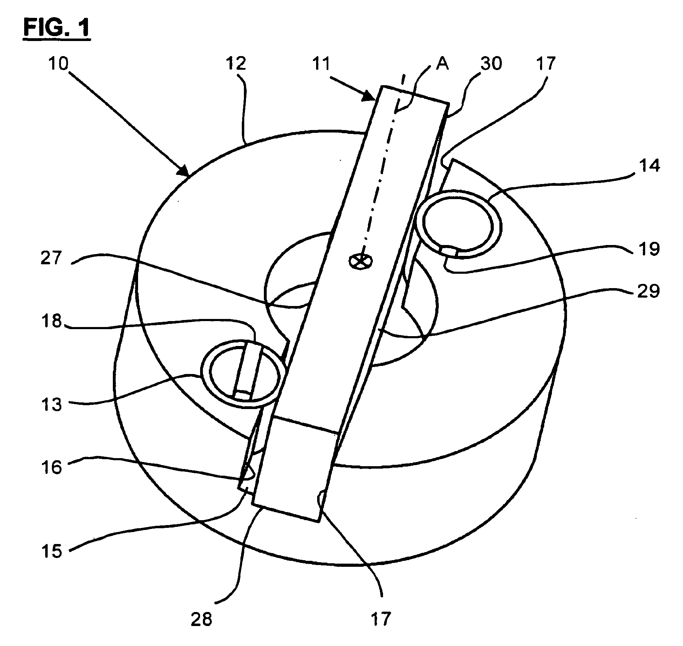

Im Folgenden wird die Erfindung am Beispiel einer Mitnehmerkupplung ausführlich beschrieben, die in den Fig. 1 bis 9 in verschiedenen Ausführungsformen dargestellt ist und ein erstes und ein zweites Kupplungsglied 10, 11 umfasst. Das erste Kupplungsglied 10 wird von einem Sinterbauteil mit Verbindungseinrichtung in verschiedenen Ausführungsformen gebildet, das hier auch erstes Bauteil 10 genannt wird, und das zweite Kupplungsglied 11 wird von einem anderen, zweiten Bauteil 11 gebildet und kann ebenfalls ein Sinterbauteil sein. Das zweite Bauteil 11 wird durch die Verbindungseinrichtung mit dem ersten Bauteil 10 verbunden, so dass die beiden Kupplungsglieder 10, 11 eingekuppelt sind.

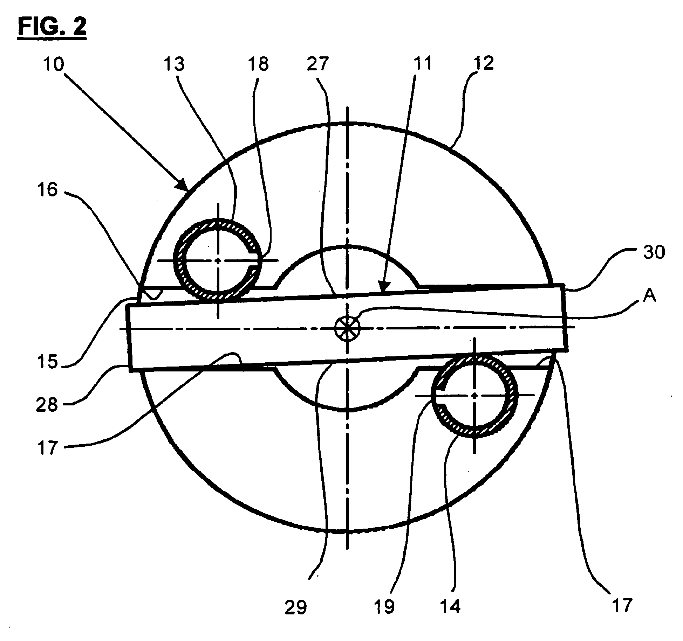

Die Fig. 1 und 2 zeigen das erste Kupplungsglied 10 in einer ersten Ausführungsform. Es umfasst hier einen Sinterwerkstoff und weist einen zylindrischen Grundkörper 12 sowie ein erstes und ein zweites Federelement 13, 14 auf. Das zweite Kupplungsglied 11 weist hier zur Vereinfachung der Beschreibung lediglich die Form eines Quaders auf. In der Oberseite des Grundkörpers 12 ist ein Aufnahmeraum 15 in Form einer längs eines Durchmessers des Grundkörpers 12 verlaufenden Nut mit rechteckigem Querschnittsprofil ausgebildet. Der Aufnahmeraum 15 weist eine in der Fig. 1 links und in der Fig. 2 oben liegende, erste Seitenwand, die rechtwinklig zur in den Fig. 1 und 2 von unten nach oben beziehungsweise von hinten nach vorne laufenden Längsachse A der Mitnehmerkupplung verläuft und hier auch Gegenfläche 16 genannt wird, und eine in der Fig. 1 rechts und in der Fig. 2 unten liegende, zweite Seitenwand auf, die parallel zu der ersten Seitenwand verläuft und hier auch Anlagefläche 17 genannt wird. Gegenfläche 16 und Anlagefläche 17 weisen also zueinander hin und begrenzen den Aufnahmeraum 15. Die Breite des Aufnahmeraums 15 ist größer als die Breite des zweiten Kupplungsglieds 11, so dass das zweite Kupplungsglied 11 mit Spiel, wenn die Federelemente 13, 14 nicht berücksichtigt werden, in dem Aufnahmeraum 15 sitzt.

In der Oberseite des Grundkörpers 12 sind zudem ein erstes Loch 18 und ein zweites Loch 19 in Form von Sackbohrungen ausgebildet, die sich parallel zur Längsachse A der Mitnehmerkupplung erstrecken. Das erste Loch 18 liegt in dem Material des Grundkörpers 12 hinter der Gegenfläche 16 mit radialem Abstand zur Längsachse A, und das zweite Loch 19 liegt diametral zum ersten Loch 18 in dem Material des Grundkörpers 12 hinter der Anlagefläche 17. Der Durchmesser des ersten Lochs 18 ist größer als der Abstand der Längsachse A des ersten Loches 18 von der Gegenfläche 16, so dass das erste Loch 18 über einen Spalt in der Gegenfläche 16 mit dem Aufnahmeraum 15 verbunden ist. Analog hierzu ist der Durchmesser des zweiten Lochs 19 größer als der Abstand der Längsachse A des zweiten Lochs 19 von der Anlagefläche 17, so dass das zweite Loch 19 über einen Spalt in der Anlagefläche 17 mit dem Aufnahmeraum 15 verbunden ist. Die Vertiefungen des ersten Kupplungsglieds 10, also der Aufnahmeraum 15 und die Löcher 18, 19, bilden hier keine Hinterschneidungen.

Die Federelemente 13, 14 sind jeweils als in Längsrichtung geschlitzte Hohlzylinder ausgebildet, wobei der Schlitz hier parallel zur Längsachse des Hohlzylinders verläuft und eine Breite aufweist, die einen gewünschten Federweg des Federelementes 13, 14 bei radialer Druckbelastung ermöglicht. Der Außendurchmesser der entspannten Federelemente 13, 14 entspricht im Wesentlichen dem Durchmesser der jeweiligen Löcher 18, 19 und kann nach Bedarf kleiner, gleich oder größer als dieser Lochdurchmesser gewählt werden. Er sollte aber größer als die Summe aus dem Lochradius und dem Abstand der Längsachse des entsprechenden Lochs 18, 19 von der Gegenfläche 16 beziehungsweise Anlagefläche 17 sein, damit ein Teil der Umfangsfläche des Federelementes 13, 14 auch dann durch den Spalt in den Aufnahmeraum 15 ragt, wenn das Federelement 13, 14 an dem hintersten, von dem Spalt entferntesten Teil der Umfangsfläche des Lochs 18, 19 anliegt.

Das erste Federelement 13 weist einen im Aufnahmeraum 15 liegenden Anlagebereich auf, der an einer zur Gegenfläche 16 weisenden, in der Fig. 1 links und in der Fig. 2 oben liegenden, ersten Stützfläche 27 des zweiten Kupplungsglieds 11 anliegt, und es drückt den entsprechenden in der Fig. 1 unten und in der Fig. 2 links liegenden, ersten Endabschnitt 28 des zweiten Kupplungsglieds 11 federnd gegen die Anlagefläche 17. Analog hierzu weist das zweite Federelement 14 einen im Aufnahmeraum 15 liegenden Anlagebereich auf, der an einer anderen, gegenüber liegenden, zur Anlagefläche 17 weisenden, in der Fig. 1 rechts und in der Fig. 2 unten liegenden, zweiten Stützfläche 29 des zweiten Kupplungsglieds 11 anliegt, und es drückt den entsprechenden in der Fig. 1 oben und in der Fig. 2 rechts liegenden, zweiten Endabschnitt 30 des zweiten Kupplungsglieds 11 federnd gegen die Gegenfläche 16. Folglich wird durch die Federelemente 13, 14 das Spiel ausgeglichen, das auf Grund der geringen Breite des zweiten Kupplungsglieds 11 im Vergleich zur Breite des Aufnahmeraums 15 eigentlich vorhanden sein sollte und bei fehlenden Federelementen 13, 14 auch vorhanden wäre.

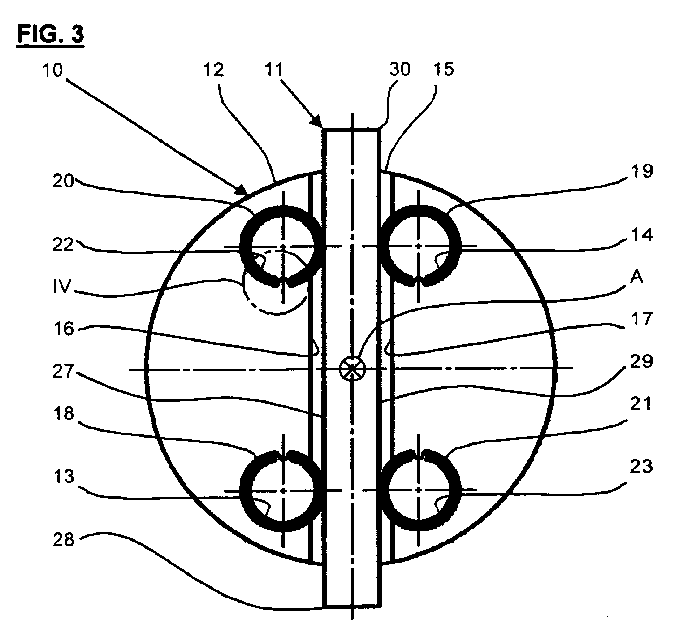

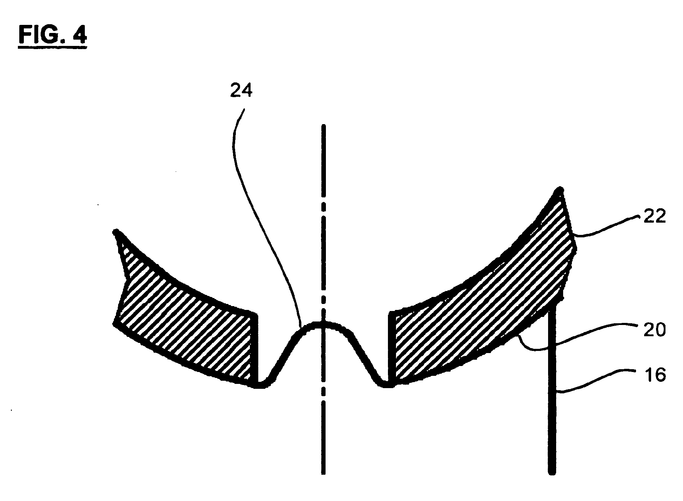

Die Fig. 3 und 4 zeigen ein Kupplungsglied 10 in einer zweiten Ausführungsform, die der ersten Ausführungsform ähnelt, so dass im Folgenden lediglich die Unterschiede ausführlicher beschrieben werden. Bei dieser zweiten Ausführungsform weist das erste Kupplungsglied 10 ein weiteres, drittes Loch 20, das wie das erste Loch 18 hinter der Gegenfläche 16 ausgebildet und über einen Spalt mit dem Aufnahmeraum 15 verbunden ist, aber anders als das erste Loch 18 dem zweiten Loch 19 gegenüber liegt, und ein weiteres, viertes Loch 21 auf, das wie das zweite Loch 19 hinter der Anlagefläche 17 ausgebildet und über einen Spalt mit dem Aufnahmeraum 15 verbunden ist, aber anders als das zweite Loch 19 dem ersten Loch 18 gegenüber liegt. In dem dritten und vierten Loch 20, 21 sind entsprechend ein weiteres, drittes Federelement 22 und ein weiteres, viertes Federelement 23 angeordnet, die an der ersten beziehungsweise der zweiten, in der Fig. 3 linken beziehungsweise rechten Stützfläche 27, 29 des zweiten Kupplungsglieds 11 anliegen. Das zweite Kupplungsglied 11 wird also in dem in der Fig. 3 unteren, ersten Endabschnitt 28 zwischen dem ersten und vierten Federelement 13, 23 und in dem in der Fig. 3 oberen, zweiten Endabschnitt 30 zwischen dem zweiten und dritten Federelement 14, 22 gehalten.

Bei der zweiten Ausführungsform ist darüber hinaus bei jedem Loch 18-21 vorgesehen, dass an der Lochwand eine Rippe 24 parallel zur Längsachse des Lochs 18-21 verläuft. Die Fig. 4 zeigt in vergrößertem Maßstab den Ausschnitt IV der Fig. 3 um die Rippe 24 des dritten Lochs 20 herum. Dort ist gut zu erkennen, dass das dritte Federelement 22 derart in dem dritten Loch 20 sitzt, dass die Rippe 24 in seinem Schlitz liegt. Dadurch wird ein Verdrehen des dritten Federelementes 22 im dritten Loch 20 verhindert.

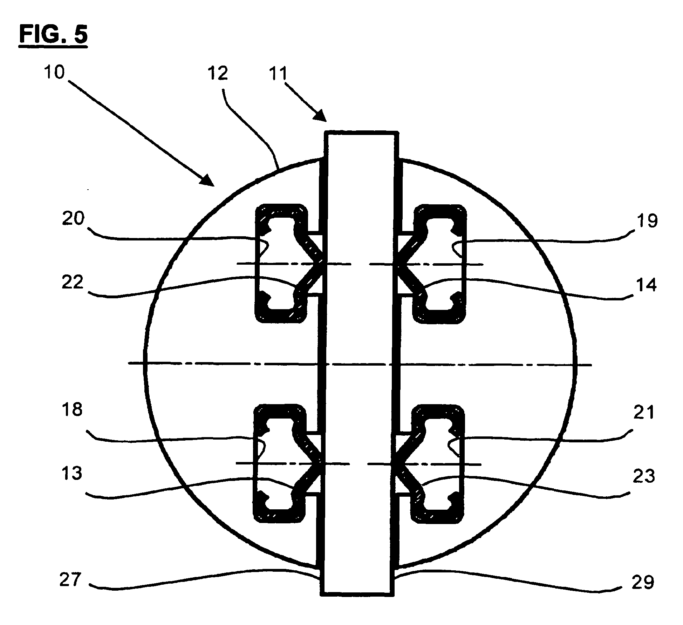

Die Fig. 5 zeigt ein erstes Kupplungsglied 10 in einer dritten Ausführungsform, die der zweiten Ausführungsform ähnelt, so dass im Folgenden lediglich die Unterschiede näher beschrieben werden. Bei dieser dritten Ausführungsform weisen die vier Löcher 18-21 einen rechteckigen Querschnitt auf, dessen längere Seiten parallel zur Gegenfläche 16 und Anlagefläche 17 verlaufen. Auch die vier Federelemente 13, 14, 22, 23 weisen einen im wesentlichen rechteckigen Querschnitt auf, wobei ihre Schlitze jeweils in der längeren Seite, die von dem Aufnahmeraum 15 abgewandt ist, liegen und die andere längere Seite, die zum Aufnahmeraum 15 hin weist, einen satteldachförmig nach außen, also zum Aufnahmeraum 15 hin, aufgeworfenen Anlagebereich aufweist, der durch den Spalt in den Aufnahmeraum 15 ragt und mit seiner Firstlinie an den Stützflächen 27, 29 des zweiten Kupplungsglieds 11 anliegt. Da wegen der Form der Löcher 18-21 und der Federelemente 13, 14, 22, 23 ein Verdrehen der Federelemente 13, 14, 22, 23 in den Löchern 18-21 nicht möglich ist, entfallen bei dieser dritten Ausführungsform die Rippen 24 der zweiten Ausführungsform.

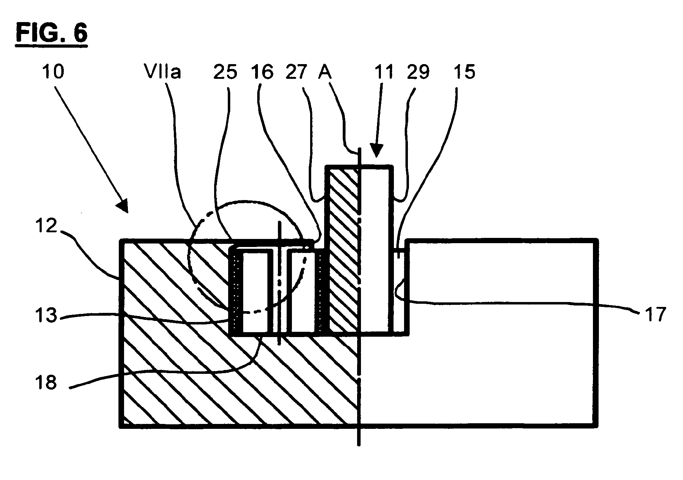

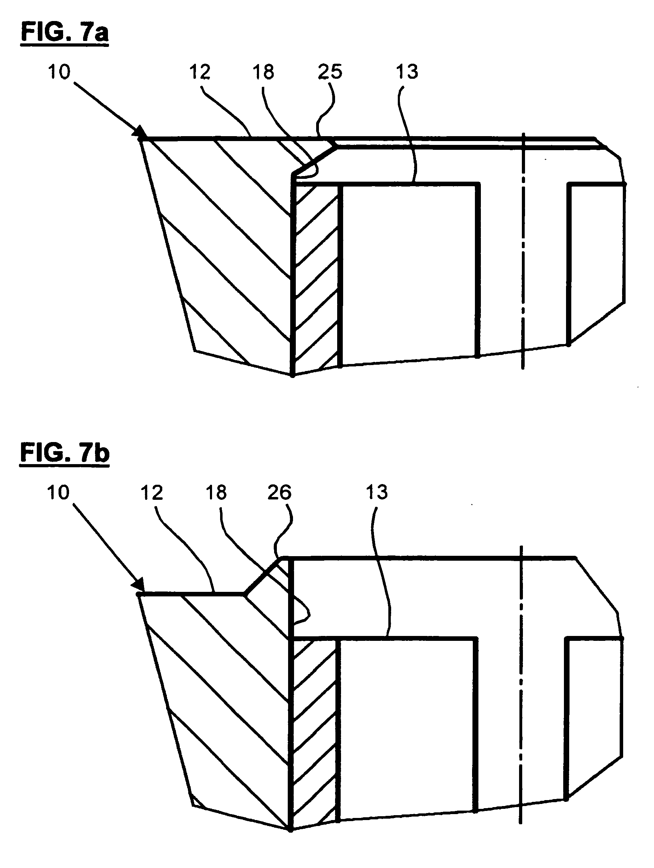

Die Fig. 6, 7a und 7b zeigen ein Kupplungsglied 10 in einer vierten Ausführungsform, die der ersten Ausführungsform ähnelt, so dass im Folgenden lediglich die Unterschiede ausführlicher beschrieben werden. Die Fig. 6 zeigt in der linken Hälfte einen Schnitt durch das erste Kupplungsglied 10 im Bereich des ersten Loches 18, die Fig. 7a zeigt in vergrößertem Maßstab die Einzelheit Vlla der Fig. 6. Bei dieser vierten Ausführungsform wird der Rand, der die Öffnung des ersten Lochs 18 begrenzt, von einem radial einwärts vorspringenden Materialüberschuss 25 gebildet. Dadurch wird verhindert, dass das erste Federelement 13, das im ersten Loch 18 unterhalb des Randes beziehungsweise Materialüberschusses 25 sitzt und dessen Außendurchmesser größer als der Durchmesser der Öffnung ist, nicht durch die Öffnung aus dem ersten Loch 18 herausrutschen kann.

Die Fig. 7b zeigt eine Vorstufe des ersten Kupplungsglieds 10, bei der die Öffnung noch nicht durch den radial vorspringenden Rand beziehungsweise Materialüberschuss 25 der Fig. 7a verengt ist, sondern denselben Durchmesser wie die restliche, sich nach unten anschließende Umfangsfläche des ersten Lochs 18 aufweist. Vielmehr wird bei dieser Vorstufe die Öffnung von einem Rand, der von einem axial vorspringenden Materialüberschuss 26 gebildet wird, umgeben, so dass das erste Federelement 13 von oben axial in das erste Loch 18 hinein geschoben werden kann. In einem nachfolgenden Verfahrensschritt wird dann dieser axial vorspringende Rand beziehungsweise Materialüberschuss 26 radial einwärts umgelegt beziehungsweise umgeformt, so dass der radial einwärts vorspringende Rand beziehungsweise Materialüberschuss 25 entsteht. Dieses Umformen kann bevorzugt durch Bördeln oder Taumelnieten erfolgen.

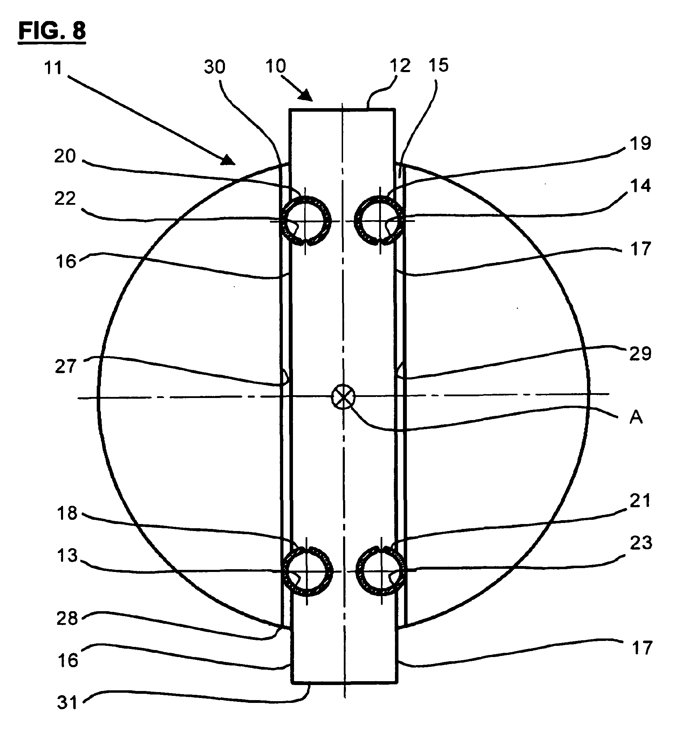

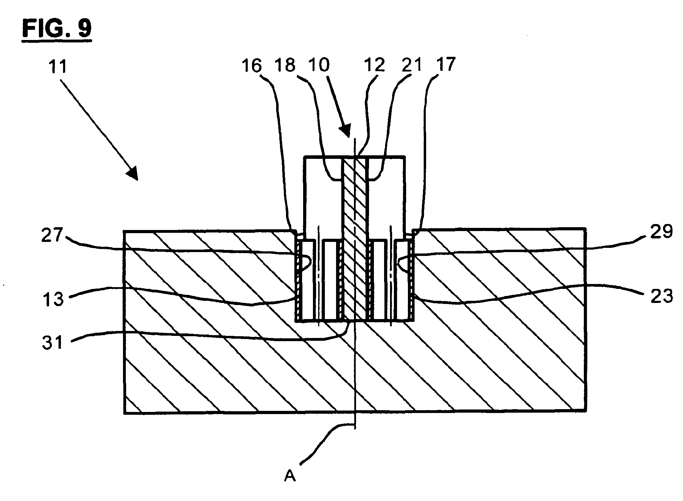

Die Fig. 8 und 9 zeigen ein Kupplungsglied 10 in einer fünften Ausführungsform, die der zweiten Ausführungsform ähnelt, so dass im Folgenden lediglich die Unterschiede ausführlicher beschrieben werden. Bei dieser fünften Ausführungsform weist das erste Kupplungsglied 10 im Wesentlichen die Form des zweiten Kupplungsglieds 11 der zweiten Ausführungsform, also die Form eines Quaders, und das zweite Kupplungsglied 11 im Wesentlichen die Form des ersten Kupplungsglieds 10 der zweiten Ausführungsform auf, also einen zylindrischen Grundkörper 12 mit dem Aufnahmeraum 15 in Form einer Nut mit rechteckigem Querschnittsprofil. Das erste Kupplungsglied weist einen Vorsprung 31 zum Einsetzen in den Aufnahmeraum 15 auf, der hier zur Vereinfachung der Beschreibung durch den in dem Aufnahmeraum 15 aufgenommenen, in der Fig. 9 unteren Abschnitt des Grundkörpers 12 gebildet ist.

Bei dieser fünften Ausführungsform umfasst der Vorsprung 31, und nicht wie bei der zweiten Ausführungsform der Aufnahmeraum 15, die Anlagefläche 17 und die Gegenfläche 16, die in den Fig. 8 und 9 rechts beziehungsweise links liegen. Dementsprechend bilden hier die erste und die zweite, in den Fig. 8 und 9 linke beziehungsweise rechte Seitenwand des Aufnahmeraums 15 die erste beziehungsweise die zweite Stützfläche 27, 29 des zweiten Kupplungsglieds 11. Die beiden Stützflächen 27, 29 weisen also zueinander hin und begrenzen den Aufnahmeraum 15, wohingegen Gegenfläche 16 und Anlagefläche 17 voneinander weg weisen und den Vorsprung 31 begrenzen. Die Breite des Aufnahmeraums 15 ist größer als die Breite des Vorsprungs 31, so dass der Vorsprung mit Spiel, wenn die Federelemente 13, 14 nicht berücksichtigt werden, in dem Aufnahmeraum 15 sitzt.

Bei dieser fünften Ausführungsform sind die vier Löcher 18-21 in der Oberseite des Grundkörpers 12 nicht wie bei der zweiten Ausführungsform in Form von Sackbohrungen, sondern von Durchgangsbohrungen ausgebildet.

Wie bei der zweiten Ausführungsform sind die vier Löcher 18-21 in dem Material des Grundkörpers 12 jeweils mit radialem Abstand zur in den Fig. 8 und 9 von hinten nach vorne beziehungsweise von unten nach oben laufenden Längsachse A der Mitnehmerkupplung ausgebildet, so dass das erste und das dritte Loch 18, 20 hinter der Gegenfläche 16 jeweils dem vierten beziehungsweise dem zweiten Loch 21, 19 gegenüber liegen und das zweite und das vierte Loch 19, 21 hinter der Anlagefläche 17 jeweils diametral zum ersten beziehungsweise dritten Loch 18, 20 liegen. Die vier Federelemente 13, 14, 22, 23 sind wie bei der zweiten Ausführungsform in den vier Löchern 18-21 angeordnet, ragen mit ihren Anlagebereichen durch ihren jeweiligen Spalt in den Aufnahmeraum 15 und liegen mit ihren Anlagebereichen an der ersten beziehungsweise der zweiten Stützfläche 27, 29 an. Das zweite Kupplungsglied 11 wird also in dem in der Fig. 8 unteren, ersten Endabschnitt 28 von dem ersten und vierten Federelement 13, 23 und in dem in der Fig. 8 oberen, zweiten Endabschnitt 30 von dem zweiten und dritten Federelement 14, 22 gehalten.

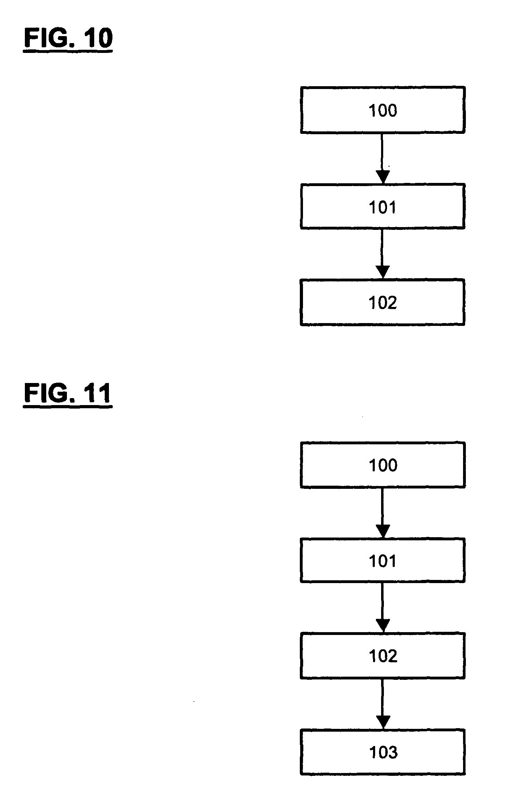

Die Fig. 10 zeigt ein Ablaufdiagramm eines Verfahrens zum Herstellen eines Sinterbauteils mit Verbindungseinrichtung, insbesondere eines Kupplungsglieds für eine Mitnehmerkupplung in einer ersten Ausführungsform. Zur beispielhaften Erläuterung dieser ersten Ausführungsform sei angenommen, dass das herzustellende Sinterbauteil beziehungsweise Kupplungsglied das erste Kupplungsglied 10 in der ersten Ausführungsform ist. Bei dieser ersten Ausführungsform des Verfahrens wird in einem Schritt 100 ein Grünling geformt, der dem Grundkörper 12 des ersten Kupplungsglieds 10 entspricht. Der Grünling weist also einen Aufnahmeraum 15 zur Aufnahme eines anderen Bauteils - beispielsweise des zweiten Kupplungsglieds 11 in den Fig. 1 und 2 - auf, wobei der Aufnahmeraum 15 eine Anlagefläche 17 und eine Gegenfläche 16 umfasst, die zu der Anlagefläche 17 hin weist, und wobei ein erstes Loch 18 hinter der Gegenfläche 16 und ein zweites Loch 19 hinter der Anlagefläche 17 ausgebildet und jeweils über einen Spalt mit dem Aufnahmeraum 15 verbunden sind. Das Formen des Grünlings kann durch Pressen des Sinterwerkstoffpulvers oder durch andere geeignete Verfahren erfolgen. In einem folgenden Schritt 101 wird der Grünling gesintert. In einem folgenden Schritt 102 werden ein erstes Federelement 13 und ein zweites Federelement 14 in das erste beziehungsweise zweite Loch 18, 19 derart eingesetzt, dass jedes der Federelemente 13, 14 einen Anlagebereich zur Anlage an dem zweiten Kupplungsglied 11 aufweist, der durch den Spalt seines jeweiligen Lochs 18, 19 in den Aufnahmeraum 15 ragt. Somit ist das erste Kupplungsglied 10 für eine Mitnehmerkupplung, das einen Sinterwerkstoff umfasst, hergestellt.

Die Fig. 11 zeigt ein Ablaufdiagramm eines Verfahrens zum Herstellen eines Sinterbauteils mit Verbindungseinrichtung, insbesondere eines Kupplungsglieds für eine Mitnehmerkupplung in einer zweiten Ausführungsform. Diese zweite Ausführungsform ähnelt der ersten Ausführungsform des Verfahrens, so dass im Folgenden lediglich die Unterschiede ausführlicher beschrieben werden. Zur beispielhaften Erläuterung dieser zweiten Ausführungsform des Verfahrens sei angenommen, dass das herzustellende Sinterbauteil beziehungsweise Kupplungsglied das erste Kupplungsglied 10 in der vierten Ausführungsform ist. Bei dieser zweiten Ausführungsform des Verfahrens ist im Schritt 100 zusätzlich vorgesehen, dass beim Formen des Grünlings an zumindest einem Teil des Umfangsrandes der beiden Löcher 18, 19 Materialüberschuss 26 vorgesehen ist, der axial vorspringt. In einem Schritt 103, der auf den Schritt 102 folgt, wird dieser axial vorspringende Materialüberschuss 26 derart umgeformt, dass ein radial einwärts vorspringender Rand beziehungsweise Materialüberschuss 25 gebildet wird. Dieses Umformen des axial vorspringenden Randes beziehungsweise Materialüberschusses 26 kann beispielsweise durch Bördeln oder Taumelnieten erfolgen.

### BEZUGSZEICHENLISTE

- 10: erstes Kupplungsglied
- 11: zweites Kupplungsglied
- 12: Grundkörper
- 13: erstes Federelement
- 14: zweites Federelement
- 15: Aufnahmeraum
- 16: Gegenfläche
- 17: Anlagefläche
- 18: erstes Loch
- 19: zweites Loch
- 20: drittes Loch
- 21: viertes Loch
- 22: drittes Federelement
- 23: viertes Federelement
- 24: Rippe
- 25: radial vorspringender Materialüberschuss
- 26: axial vorspringender Materialüberschuss
- 27: erste Stützfläche von 11
- 28: erster Endabschnitt von 11
- 29: zweite Stützfläche von 11
- 30: zweiter Endabschnitt von 11
- 100-103: Verfahrensschritte

## Patentansprüche

1. Kupplungsglied (10) für eine Mitnehmerkupplung, das einen Aufnahmeraum (15) zur Aufnahme eines anderen Kupplungsglieds (11) der Mitnehmerkupplung aufweist, wobei der Aufnahmeraum (15) eine Anlagefläche (17) und eine Gegenfläche (16) umfasst, die zu der Anlagefläche (17) hin weist, wobei:
- ein Loch (18) hinter der Gegenfläche (16) ausgebildet und über einen Spalt mit dem Aufnahmeraum (15) verbunden ist;
- das Loch (18) sich parallel zur Längsachse (A) der Mitnehmerkupplung erstreckt;
- ein Federelement (13) in dem Loch (18) angeordnet ist und einen Anlagebereich zur Anlage an dem anderen Kupplungsglied (11) aufweist, der durch den Spalt in den Aufnahmeraum (15) ragt.

2. Kupplungsglied (10) für eine Mitnehmerkupplung, das einen Vorsprung (31) zum Einsetzen in einen Aufnahmeraum (15) eines anderen Kupplungsglieds (11) der Mitnehmerkupplung aufweist, wobei der Vorsprung (31) eine Anlagefläche (17) und eine Gegenfläche (16) umfasst, die von der Anlagefläche (17) weg weis wobei:
- ein Loch (18) hinter der Gegenfläche (16) ausgebildet und über einen Spalt mit dem Aufnahmeraum (15) verbunden ist;
- das Loch (18) sich parallel zur Längsachse (A) der Mitnehmerkupplung erstreckt;
- ein Federelement (13) in dem Loch (18) angeordnet ist und einen Anlagebereich zur Anlage an dem anderen Kupplungsglied (11) aufweist, der durch den Spalt in den Aufnahmeraum (15) ragt.

3. Kupplungsglied (10) nach einem der vorhergehenden Ansprüche, wobei das Kupplungsglied (10) einen Sinterwerkstoff umfasst.

4. Kupplungsglied (10) nach einem der vorhergehenden Ansprüche, wobei:
- wenigstens ein weiteres Loch (20) hinter der Gegenfläche (16) ausgebildet und über einen Spalt mit dem Aufnahmeraum (15) verbunden ist;
- jedes weitere Loch (20) sich parallel zur Längsachse (A) der Mitnehmerkupplung erstreckt;
- wenigstens ein weiteres Federelement (22) in jedem weiteren Loch (20) angeordnet ist und einen Anlagebereich zur Anlage an dem anderen Kupplungsglied (11) aufweist, der durch den Spalt in den Aufnahmeraum (15) ragt.

5. Kupplungsglied (10) nach einem der vorhergehenden Ansprüche, wobei:
- wenigstens ein weiteres Loch (19, 21) hinter der Anlagefläche (17) ausgebildet und über einen Spalt mit dem Aufnahmeraum (15) verbunden ist;
- jedes weitere Loch (19, 21) sich parallel zur Längsachse (A) der Mitnehmerkupplung erstreckt;
- wenigstens ein weiteres Federelement (14, 23) in jedem weiteren Loch (19, 21) angeordnet ist und einen Anlagebereich zur Anlage an dem anderen Kupplungsglied (11) aufweist, der durch den Spalt in den Aufnahmeraum (15) ragt.

6. Kupplungsglied (10) nach einem der vorhergehenden Ansprüche, wobei das Federelement (13, 14, 22, 23) einen Hohlzylinder umfasst, der einen zwischen den beiden Stirnflächen, bevorzugt parallel zur Längsachse, verlaufenden Schlitz aufweist.

7. Kupplungsglied (10) nach einem der vorhergehenden Ansprüche, wobei das Federelement (13, 14, 22, 23) einen Ring umfasst, der einen Schlitz aufweist.

8. Kupplungsglied (10) nach Anspruch 6 oder 7, wobei eine Erhebung (24), bevorzugt eine parallel zur Längsachse des Lochs verlaufende Rippe, von der Umfangsfläche des Lochs (18-21) vorspringt und in dem Schlitz liegt.

9. Kupplungsglied (10) nach einem der vorhergehenden Ansprüche, wobei das Federelement (13, 14, 22, 23) einen Stift oder Bolzen aus Kunststoff und/oder Gummi umfasst.

10. Kupplungsglied (10) nach einem der vorhergehenden Ansprüche, wobei das Federelement (13, 14, 22, 23) eine Umfangsfläche mit ovalem, bevorzugt elliptischem, bevorzugt kreisrundem Querschnitt aufweist.

11. Kupplungsglied (10) nach einem der vorhergehenden Ansprüche, wobei das Loch (18-21) einen ovalen, bevorzugt elliptischen, bevorzugt kreisrunden Querschnitt aufweist.

12. Kupplungsglied (10) nach einem der vorhergehenden Ansprüche, wobei der Anlagebereich ein Teil der äußeren Umfangsfläche des Federelements (13, 14, 22, 23) ist.

13. Kupplungsglied (10) nach einem der vorhergehenden Ansprüche, wobei das Loch (18-21) wenigstens eine Öffnung aufweist, deren Rand (25) zumindest teilweise radial einwärts vorspringt.

14. Kupplungsglied (10) nach Anspruch 13, wobei der Rand (25) als Bördelkante ausgebildet ist.

15. Kupplungsglied (10) nach einem der vorhergehenden Ansprüche, wobei das Federelement (13, 14, 22, 23) an wenigstens einer Stelle, bevorzugt im Bereich des Loches (18-21), an dem Kupplungsglied (10), bevorzugt durch Punktschweißen, befestigt ist.

16. Verfahren zum Herstellen eines Sinterbauteils (10) mit Verbindungseinrichtung, insbesondere eines Kupplungsglieds (10) für eine Mitnehmerkupplung, mit den Schritten, dass:
- ein Grünling (12) geformt (100) wird, der einen Aufnahmeraum (15) zur Aufnahme eines anderen Bauteils (11), insbesondere eines anderen Kupplungsglieds (11) der Mitnehmerkupplung aufweist, wobei der Aufnahmeraum (15) eine Anlagefläche (17) und eine Gegenfläche (16) umfasst, die zu der Anlagefläche (17) hin weist, und wobei wenigstens ein Loch (18, 20) hinter der Gegenfläche (16) ausgebildet und über einen Spalt mit dem Aufnahmeraum (15) verbunden ist;
- der Grünling (12) gesintert (101) wird; und
- wenigstens ein Federelement (13, 22) in jedes Loch (18, 20) derart eingesetzt (102) wird, dass es einen Anlagebereich zur Anlage an dem anderen Bauteil beziehungsweise Kupplungsglied (11) aufweist, der durch den Spalt in den Aufnahmeraum (15) ragt.

17. Verfahren zum Herstellen eines Sinterbauteils (10) mit Verbindungseinrichtung, insbesondere eines Kupplungsglieds (10) für eine Mitnehmerkupplung, mit den Schritten, dass:
- ein Grünling (12) geformt (100) wird, der einen Vorsprung (31) zum Einsetzen in einen Aufnahmeraum (15) eines anderen Bauteils (11), insbesondere eines anderen Kupplungsglieds (11) der Mitnehmerkupplung aufweist, wobei der Vorsprung (31) eine Anlagefläche (17) und eine Gegenfläche (16) umfasst, die von der Anlagefläche (17) weg weist, und wobei wenigstens ein Loch (18, 20) hinter der Gegenfläche (16) ausgebildet und über einen Spalt mit dem Aufnahmeraum (15) verbunden ist;
- der Grünling (12) gesintert (101) wird; und
- wenigstens ein Federelement (13, 22) in jedes Loch (18, 20) derart eingesetzt (102) wird, dass es einen Anlagebereich zur Anlage an dem anderen Bauteil beziehungsweise Kupplungsglied (11) aufweist, der durch den Spalt in den Aufnahmeraum (15) ragt.

18. Verfahren nach einem der Ansprüche 16 oder 17, wobei:
- wenigstens ein weiteres Loch (19, 21) hinter der Anlagefläche (17) ausgebildet und über einen Spalt mit dem Aufnahmeraum (15) verbunden ist; und
- wenigstens ein weiteres Federelement (14, 23) in jedes weitere Loch (19, 21) derart eingesetzt (102) wird, dass es einen Anlagebereich zur Anlage an dem anderen Bauteil beziehungsweise Kupplungsglied (11) aufweist, der durch den Spalt in den Aufnahmeraum (15) ragt.

19. Verfahren nach einem der Ansprüche 16 bis 18 wobei:
- beim Formen (100) des Grünlings (12) an zumindest einem Teil des Umfangsrandes jedes Lochs Materialüberschuss (26) vorgesehen ist, der axial vorspringt;
- nach dem Einsetzen (102) des Federelements (13, 22) der Materialüberschuss (26) derart umgeformt (103) wird, dass er zumindest teilweise radial einwärts vorspringt (25).

20. Verfahren nach Anspruch 19, wobei das Umformen (103) des Materialüberschusses (26) durch Bördeln oder Taumelnieten erfolgt.

21. Verfahren nach einem der Ansprüche 16 bis 20, wobei das Federelement (13, 22) an wenigstens einer Stelle, bevorzugt im Bereich des Loches (18, 20), an dem Bauteil beziehungsweise Kupplungsglied (10), bevorzugt durch Punktschweißen, befestigt wird.

22. Verfahren nach einem der Ansprüche 16 bis 21, wobei jedes Loch (18, 19, 20, 21) sich parallel zur Längsachse (A) der Mitnehmerkupplung erstreckt.

## Claims

1. Coupling link (10) for a catch coupling which has a receiving space (15) to receive another coupling link (11) of the catch coupling, wherein the receiving space (15) comprises a contact surface (17) and a counterface (16) which points towards the contact surface (17), wherein:
- a hole (18) is developed behind the counterface (16) and connected to the receiving space (15) via a gap;
- the hole (18) extends parallel to the longitudinal axis (A) of the catch coupling;
- a spring element (13) is arranged in the hole (18) and has a contact area for contact with the other coupling link (11) which projects into the receiving space (15) through the gap.

2. Coupling link (10) for a catch coupling which has a projection (31) for insertion into a receiving space (15) of another coupling link (11) of the catch coupling, wherein the projection (31) comprises a contact surface (17) and a counterface (16) which points away from the contact surface (17), wherein:
- a hole (18) is developed behind the counterface (16) and connected to the receiving space (15) via a gap;
- the hole (18) extends parallel to the longitudinal axis (A) of the catch coupling;
- a spring element (13) is arranged in the hole (18) and has a contact area for contact with the other coupling link (11) which projects into the receiving space (15) through the gap.

3. Coupling link (10) according to one of the preceding claims, wherein the coupling link (10) comprises a sintered material.

4. Coupling link (10) according to one of the preceding claims, wherein:
- at least one further hole (20) is developed behind the counterface (16) and connected to the receiving space (15) via a gap;
- each further hole (20) extends parallel to the longitudinal axis (A) of the catch coupling;
- at least one further spring element (22) is arranged in each further hole (20) and has a contact area for contact with the other coupling link (11) which projects into the receiving space (15) through the gap.

5. Coupling link (10) according to one of the preceding claims, wherein:
- at least one further hole (19, 21) is developed behind the contact surface (17) and connected to the receiving space (15) via a gap;
- each further hole (19, 21) extends parallel to the longitudinal axis (A) of the catch coupling;
- at least one further spring element (14, 23) is arranged in each further hole (19, 21) and has a contact area for contact with the other coupling link (11) which projects into the receiving space (15) through the gap.

6. Coupling link (10) according to one of the preceding claims, wherein the spring element (13, 14, 22, 23) comprises a hollow cylinder which has a slot running between the two end faces, preferably parallel to the longitudinal axis.

7. Coupling link (10) according to one of the preceding claims, wherein the spring element (13, 14, 22, 23) comprises a ring which has a slot.

8. Coupling link (10) according to claim 6 or 7, wherein an elevation (24), preferably a rib running parallel to the longitudinal axis of the hole, projects from the peripheral area of the hole (18 - 21) and lies in the slot.

9. Coupling link (10) according to one of the preceding claims, wherein the spring element (13, 14, 22, 23) comprises a pin or bolt made of plastic and/or rubber.

10. Coupling link (10) according to one of the preceding claims, wherein the spring element (13, 14, 22, 23) has a peripheral area with an oval, preferably elliptic, preferably circular cross-section.

11. Coupling link (10) according to one of the preceding claims, wherein the hole (18 - 21) has an oval, preferably elliptic, preferably circular cross-section.

12. Coupling link (10) according to one of the preceding claims, wherein the contact area is part of the outer peripheral area of the spring element (13, 14, 22, 23).

13. Coupling link (10) according to one of the preceding claims, wherein the hole (18 - 21) has at least one opening, the edge of which (25) projects inwards at least partially radially.

14. Coupling link (10) according to claim 13, wherein the edge (25) is developed as a flanged edge.

15. Coupling link (10) according to one of the preceding claims, wherein the spring element (13, 14, 22, 23) is attached at at least one place, preferably in the area of the hole (18 - 21), to the coupling link (10), preferably by spot welding.

16. Method for producing a sintered component (10) with connection apparatus, in particular a coupling link (10) for a catch coupling, with the steps that:
- a preform (12) is formed (100) which has a receiving space (15) to receive another component (11), in particular another coupling link (11) of the catch coupling, wherein the receiving space (15) comprises a contact surface (17) and a counterface (16) which points towards the contact surface (17), and wherein at least one hole (18, 20) is developed behind the counterface (16) and connected to the receiving space (15) via a gap;
- the preform (12) is sintered (101); and
- at least one spring element (13, 22) is inserted (102) into each hole (18, 20) in such a way that it has a contact area for contact with the other component or coupling link (11) which projects into the receiving space (15) through the gap.

17. Method for producing a sintered component (10) with connection apparatus, in particular a coupling link (10) for a catch coupling, with the steps that:
- a preform (12) is formed (100) which has a projection (31) for inserting into a receiving space (15) of another component (11), in particular another coupling link (11) of the catch coupling, wherein the projection (31) comprises a contact surface (17) and a counterface (16) which points away from the contact surface (17), and wherein at least one hole (18, 20) is developed behind the counterface (16) and connected to the receiving space (15) via a gap;
- the preform (12) is sintered (101); and
- at least one spring element (13, 22) is inserted (102) into each hole (18, 20) in such a way that it has a contact area for contact with the other component or coupling link (11) which projects into the receiving space (15) through the gap.

18. Method according to one of claims 16 or 17, wherein:
- at least one further hole (19, 21) is developed behind the contact surface (17) and is connected to the receiving space (15) via a gap; and
- at least one further spring element (14, 23) is inserted (102) into each further hole (19, 21) in such a way that it has a contact area for contact with the other component or coupling link (11) which projects into the receiving space (15) through the gap.

19. Method according to one of claims 16 to 18, wherein:
- on forming (100) of the preform (12) on at least part of the peripheral area of each hole excess material (26) is provided which projects axially;
- after inserting (102) the spring element (13, 22), the excess material (26) is formed in such a way (103) that it projects inwards at least partially radially (25).

20. Method according to claim 19, wherein the forming (103) of the excess material (26) takes place by flanging or wobble riveting.

21. Method according to one of claims 16 to 20, wherein the spring element (13, 22) is attached at at least one place, preferably in the area of the hole (18, 20), to the component or coupling link (10), preferably by spot welding.

22. Method according to one of claims 16 to 21, wherein each hole (18, 19, 20, 21) extends parallel to the longitudinal axis (A) of the catch coupling.

## Revendications

1. Elément d'accouplement (10) pour un accouplement entraîneur qui comporte un espace de réception (15) pour le logement d'un autre élément d'accouplement (11) de l'accouplement entraîneur, l'espace de réception (15) comportant une surface d'appui (17) et une contre-surface (16) qui est orientée en direction de la surface d'appui (17), sachant que :
- un trou (18) est réalisé derrière la contre-surface (16) et mis en communication avec l'espace de réception (15) par le biais d'une fente,
- le trou (18) s'étend parallèlement à l'axe longitudinal (A) de l'accouplement entraîneur,
- un élément de suspension (13) est disposé dans le trou (18) et présente une zone d'appui pour venir en appui sur l'autre élément d'accouplement (11) qui s'enfonce dans l'espace de réception (15) à travers la fente.

2. Elément d'accouplement (10) pour un accouplement entraîneur qui comporte une saillie (31) à insérer dans un espace de réception (15) d'un autre élément d'accouplement (11) de l'accouplement entraîneur, la saillie (31) présentant une surface d'appui (17) et une contre-surface (16) qui est détournée de la surface d'appui (17), sachant que :
- un trou (18) est réalisé derrière la contre-surface (16) et mis en communication avec l'espace de réception par le biais d'une fente,
- le trou (18) s'étend parallèlement à l'axe longitudinal (A) de l'accouplement entraîneur,
- un élément de suspension (13) est disposé dans le trou (18) et présente une zone d'appui pour venir en appui sur l'autre élément d'accouplement (11), zone qui s'enfonce dans l'espace de réception (15) à travers la fente.

3. Elément d'accouplement (10) selon l'une quelconque des revendications précédentes, dans lequel l'élément d'accouplement (10) contient un matériau fritté.

4. Elément d'accouplement (10) selon l'une quelconque des revendications précédentes, sachant que :
- au moins un autre trou (20) est réalisé derrière la contre-surface (16) et mis en communication avec l'espace de réception (15) par le biais d'une fente,
- chaque trou supplémentaire (20) s'étend parallèlement à l'axe longitudinal (A) de l'accouplement entraîneur,
- au moins un autre élément de suspension (22) est disposé dans chaque trou supplémentaire (20) et comporte une zone d'appui pour venir en appui sur l'autre élément d'accouplement (11), zone qui s'enfonce dans l'espace de réception (15) à travers la fente.

5. Elément d'accouplement (10) selon l'une quelconque des revendications précédentes, sachant que :
- au moins un autre trou (19, 21) est réalisé derrière la surface d'appui (17) et mis en communication avec l'espace de réception (15) par le biais d'une fente,
- chaque trou supplémentaire (19, 21) s'étend parallèlement à l'axe longitudinal (A) de l'accouplement entraîneur,
- au moins un autre élément de suspension (14, 23) est disposé dans chaque trou supplémentaire (19, 21) et comporte une zone d'appui pour venir en appui sur l'autre élément d'accouplement (11), zone qui s'enfonce dans l'espace de réception (15) à travers la fente.

6. Elément d'accouplement (10) selon l'une quelconque des revendications précédentes, dans lequel l'élément de suspension (13, 14, 22, 23) comporte un cylindre creux qui présente une fissure s'étendant entre deux surfaces frontales, de préférence de manière parallèle à l'axe longitudinal.

7. Elément d'accouplement (10) selon l'une quelconque des revendications précédentes, dans lequel l'élément de suspension (13, 14, 22, 23) comporte un anneau qui présente une fissure.

8. Elément d'accouplement (10) selon la revendication 6 ou 7, dans lequel une élévation (24), de préférence, une nervure, s'étendant parallèlement à l'axe longitudinal du trou, saille de la surface circonférentielle du trou (18 à 21) et repose dans la fissure.

9. Elément d'accouplement (10) selon l'une quelconque des revendications précédentes, dans lequel l'élément de suspension (13, 14, 22, 23) comporte une goupille ou un boulon en plastique et/ou caoutchouc.

10. Elément d'accouplement (10) selon l'une quelconque des revendications précédentes, dans lequel l'élément de suspension (13, 14, 22, 23) comporte une surface circonférentielle avec une coupe transversale ovale, de préférence elliptique, de préférence circulaire.

11. Elément d'accouplement (10) selon l'une quelconque des revendications précédentes, dans lequel le trou (18 à 21) présente une coupe transversale ovale, de préférence elliptique, de préférence circulaire.

12. Elément d'accouplement (10) selon l'une quelconque des revendications précédentes, dans lequel la zone d'appui est une partie de la surface circonférentielle externe de l'élément de suspension (13, 14, 22, 23).

13. Elément d'accouplement (10) selon l'une quelconque des revendications précédentes, dans lequel le trou (18 à 21) comporte au moins un orifice dont le bord (25) saille vers l'intérieur, au moins en partie dans le sens radial.

14. Elément d'accouplement (10) selon la revendication 13, dans lequel le bord (25) est réalisé sous la forme d'arête sertie.

15. Elément d'accouplement (10) selon l'une quelconque des revendications précédentes, dans lequel l'élément de suspension (13, 14, 22, 23) est fixé en au moins un emplacement, de préférence au niveau du trou (18 à 21), de l'élément d'accouplement (10), de préférence par soudage par points.

16. Procédé de fabrication d'un composant fritté (10) équipé d'un dispositif de raccordement, en particulier un élément d'accouplement (10) pour un accouplement entraîneur, avec les étapes suivantes :
- la formation (100) d'une ébauche de compact (12) qui présente un espace de réception (15) pour le logement d'un autre composant (11), notamment d'un autre élément d'accouplement (11) de l'accouplement entraîneur, l'espace de réception (15) comportant une surface d'appui (17) et une contre-surface (16) qui est orientée en direction de la surface d'appui (17) et au moins un trou (18, 20) étant réalisé derrière la contre-surface (16) et mis en contact avec l'espace de réception (15) par le biais d'une fente,
- le frittage (101) de l'ébauche de compact (12) et
- l'insertion (102) d'au moins un élément de suspension (13, 22) dans chaque trou (18, 20) de telle sorte qu'il comporte une zone d'appui pour venir en appui sur l'autre composant ou élément d'accouplement (11), zone qui s'enfonce dans l'espace de réception (15) à travers la fente.

17. Procédé de fabrication d'un composant fritté (10) équipé d'un dispositif de raccordement, en particulier un élément d'accouplement (10) pour un accouplement entraîneur, avec les étapes suivantes :
- la formation (100) d'une ébauche de compact (12) qui présente une saillie (31) à insérer dans un espace de réception (15) d'un autre composant (11), en particulier d'un autre élément d'accouplement (11) de l'accouplement entraîneur, la saillie (31) comportant une surface d'appui (17) et une contre-surface (16) qui n'est pas orientée en direction de la surface d'appui (17) et au moins un trou (18, 20) étant réalisé derrière la contre-surface (16) et mis en communication avec l'espace de réception (15) par le biais d'une fente,
- le frittage (101) de l'ébauche de compact (12) et
- l'insertion (102) d'au moins un élément de suspension (13, 22) dans chaque trou (18, 20) de telle sorte qu'il comporte une zone d'appui pour venir en appui sur l'autre composant ou élément d'accouplement (11), zone qui s'enfonce dans l'espace de réception (15) à travers la fente.

18. Procédé selon l'une quelconque des revendications 16 ou 17, sachant que :
- au moins un autre trou (19, 21) est réalisé derrière la surface d'appui (17) et est mis en communication avec l'espace de réception (15) par le biais d'une fente et
- au moins un autre élément de suspension (14, 23) est inséré (102) dans chaque trou supplémentaire (19, 21) de telle sorte qu'il comporte une zone d'appui pour venir en appui sur l'autre composant ou élément d'accouplement (11), zone qui s'enfonce dans l'espace de réception (15) à travers la fente.

19. Procédé selon l'une quelconque des revendications 16 à 18, sachant que :
- lors de la formation (100) de l'ébauche de compact (12), un excédent de matière (26) est prévu au moins sur une partie du bord circonférentiel de chaque trou, lequel excédent saille dans le sens axial,
- après l'insertion (102) de l'élément de suspension (13, 22), l'excédent de matière (26) est transformé (103) de telle sorte qu'il saille (25) vers l'intérieur, au moins en partie dans le sens radial.

20. Procédé selon la revendication 19, dans lequel la transformation (103) de l'excédent de matière (26) se fait par sertissage ou rivetage à fluage radial.

21. Procédé selon l'une quelconque des revendications 16 à 20, dans lequel l'élément de suspension (13, 22) est fixé en au moins un emplacement, de préférence au niveau du trou (18, 20), du composant ou de l'élément d'accouplement (10), de préférence par soudage par points.

22. Procédé selon l'une quelconque des revendications 16 à 21, dans lequel chaque trou (18, 19, 20, 21) s'étend parallèlement à l'axe longitudinal (A) de l'accouplement entraîneur.
